# EUROPEAN PATENT APPLICATION

(11) **EP 3 648 238 A1**
(43) Date of publication of application: **06.05.2020**
(21) Application number: 18823424.9
(22) Date of filing: 27.06.2018
(51) Int. Cl.: H01M 10/60

(54) **LITHIUM ION POWER BATTERY**

(30) Priority: 28.06.2017 CN 201710503309; 28.06.2017 CN 201710503711
(71) Applicant: Changsha Junengchong New Energy Co., Ltd, Changsha, Hunan 410205 (CN)
(72) Inventor: QIU, Boqian, Changsha Hunan 410205 (CN)
(74) Representative: Zaboliene, Reda
(86) International application number: PCT/CN2018/093109
(87) International publication number: WO 2019/001470

(57) **Abstract**

A lithium-ion power battery includes a battery cell including positive and negative electrode plates. The positive electrode plate includes a positive current collector and a positive active material layer coated on the positive current collector. The negative electrode plate includes a negative current collector and a negative active material layer coated on the negative current collector. At least one of the positive and negative electrode plates includes a heat conducting and collecting body which is a portion of the current collector not coated by the active material layer. At least two heat conducting and collecting bodies are stacked together to form at least one heat converging path, which allows heat energy to enter or exit from the battery cell. An insulating element is connected to the at least one heat converging path.

## Description

### FIELD

The subject matter herein generally relates to lithium-ion batteries, and more particularly, to a lithium-ion power battery.

### BACKGROUND

Traffic on the roads brings pressure on the energy crisis and environmental pollution, thus it is urgent to develop and research efficient, clean, and safe new energy vehicles to achieve energy conservation and emission reduction. Lithium-ion batteries have become the best candidates for power systems of the new energy vehicles because of high specific energy, no pollution, and no memory effect. However, the lithium-ion batteries are very sensitive to temperature, and efficient discharge and good performance of the battery pack can be only obtained within a suitable temperature range. At an elevated temperature may cause the lithium-ion battery to age faster and increase its thermal resistances faster. The cycle time becomes less, the service life becomes shorter, and even thermal runaway problems can occur at an elevated operating temperature. However, operating at too low a temperature may lower the conductivity of the electrolyte and the ability to conduct active ions, resulting an increase of the impedance, and a decrease in the capacity of the lithium-ion batteries.

Conventionally, the position of the cell is changed to improve the fluid flow path and increase the heat dissipation. The battery casing may also be improved by replacing the aluminum alloy shell material with the composite of thermoelectric material and aluminum, and by adding a plurality of heat dissipating ribs to the side of the housing. The electrode plate may also be extended into the electrolyte to transmit heat energy to the battery casing through the electrolyte and then to the outside of the battery. Although some heat is dissipated, heat dissipation efficiency is still poor since the heat cannot be directly discharged from the main heat generating component, the electrode plates, to the outside of the battery. Therefore, a new lithium-ion battery is needed.

### SUMMARY OF THE INVENTION

In order to solve the problem existing in the prior art, the present disclosure provides a lithium-ion power battery which can effectively solve the problem of excessive or low battery temperature, achieve temperature control, and improve battery life and production efficiency.

A lithium-ion power battery comprises a battery cell, a metal casing configured to receive the battery cell, an electrolyte injected into the metal casing, and a top cover plate fixedly connected to the metal casing. The battery cell comprises a positive electrode plate, a negative electrode plate, and a separator spaced between the positive electrode plate and the negative electrode plate. The positive electrode plate, the separator, and the negative electrode plate are sequentially laminated or wound to form the battery cell. The positive electrode plate carries a positive electrode tab. The negative electrode plate carries a negative electrode tab. The top cover plate carries a positive terminal post which is electrically connected to the positive electrode tab, and a negative terminal post which is electrically connected to the negative electrode tab. The negative electrode plate comprises a negative current collector and two negative active material layers which are coated on the front and back sides of the negative current collector. The positive electrode plate comprises a positive current collector and two positive active material layers which are coated on the front and back sides of the positive current collector. At least one of the positive electrode plate and the negative electrode plate further comprises a heat conducting and collecting body. The heat conducting and collecting body is a portion of the positive current collector not coated by the positive active material layer or a portion of the negative current collector not coated by the negative active material layer. At least two heat conducting and collecting bodies are stacked together to form at least one heat converging path, which is configured to transmit heat energy into or out of the battery cell. The heat converging path is stacked with or connected to an insulating element to form an insulating heat converging path assembly. The heat conducting and collecting body is integrally formed with the positive electrode plate, which simplifies the manufacturing process and increases the manufacturing efficiency. By stacking the heat conducting and collecting bodies to form the heat converging path and heating/cooling the heat converging path, the internal temperature of the battery be increased or decreased, thereby maintaining the internal temperature of the battery at a suitable working temperature, improving a working efficiency of the battery, extending a service life of the battery, and avoiding concomitant damage. The heat converging path is stacked with or connected to an insulating element, thus avoiding a short circuit of the heat converging path and concomitant damage.

The heat conducting and collecting bodies are connected by welding to form the heat converging path. Not only are the heat conducting and collecting bodies securely connected to each other, but weight of the battery is thus reduced and an energy density of the battery is improved by employing the welding connecting process.

A method of the welding comprises ultrasonic welding, laser welding, and friction welding.

The heat conducting and collecting bodies is connected by bolting or riveting. The separator will not be damaged by employing the bolting or riveting connecting processes.

The heat conducting and collecting bodies are bent towards each other. Therefore, the heat absorbed by the heat conducting and collecting bodies is converged, which facilitates heat-dissipation from the battery or heating of the battery.

The heat conducting and collecting bodies are bent be inclined with the positive electrode plate or the negative electrode plate by an angle of 0 degree to 90 degrees. Therefore, the heat absorbed by the heat conducting and collecting bodies is converged, which facilitates heat-dissipation from the battery or heating of the battery.

The entirety of the heat conducting and collecting bodies are bent toward a single direction, which facilitates the connection of the heat conducting and collecting bodies.

The heat conducting and collecting bodies are bent toward different directions. As such, the heat conducting and collecting bodies can be in stable contact with each other.

A portion of the heat conducting and collecting bodies is bent, and the portion which is bent is connected to a remaining portion of the heat conducting and collecting bodies, the remaining portion of the heat conducting and collecting bodies is straight. As such, the heat conducting and collecting bodies can be in stable contact with each other. The portion which is bent is bent towards a single direction or different directions.

At least a portion of the heat conducting and collecting bodies defines a plurality of holes or a concave and convex surface. The holes pass through the heat conducting and collecting body, and have a mesh structure or a 3D internal structure. As such, the heat conducting performance of the heat conducting and collecting body is improved.

The heat conducting and collecting body carries an insulating layer on a surface thereof. As such, a short circuit in the battery and concomitant damage are avoided.

At least one heat converging path is arranged on an end of the lithium-ion power battery having a positive tab, an end of the lithium-ion power battery opposite to the positive electrode tab, or a side of the lithium-ion power battery.

The heat conducting and collecting bodies form a plurality of heat converging paths, at least one of the plurality of heat converging paths is arranged on the end of the lithium-ion power battery having the positive electrode tab.

A portion of the heat conducting and collecting body protrude from the positive electrode plate, which facilitates the conduction and dissipation of the heat energy and the overlapping of the conducting and collecting body.

The heat conducting and collecting body protruding from the positive electrode plate is inserted into the electrolyte received in the metal casing. As such, the heat energy from the heat conducting and collecting body can be conducted into the electrolyte and further to the external surface of the battery. Therefore, heat energy is not accumulated in the battery due to poor heat conduction of the separator. Furthermore, the heat energy in the electrolyte can be quickly moved to the positive and the negative electrode plates and, such rapid transfer preventing the temperature of the positive and the negative electrode plates and from being too low.

A heat exchange device is arranged in the electrolyte for heating or cooling the electrolyte. The electrolyte can heat or cool the heat conducting and collecting bodies, thereby maintaining the temperature of the battery within a suitable range.

The heat conducting and collecting body is recessed with respect to the positive electrode plate, which facilitates reduction in weight of the battery, and further improves the energy density of the battery.

An interconnecting portion is formed between the heat conducting and collecting body and the positive electrode plate. A width of the heat conducting and collecting body is the same as a width of the interconnecting portion. As such, without increasing the weight of the battery, the contact area between the heat conducting and collecting body and the interconnecting portion is maximized and heat conduction effect is optimized.

The positive current collector or the portion which is not coated by the positive active material layer is parallel to the positive active material layer, which simplifies the manufacturing process and improves the manufacturing efficiency.

A portion of the positive current collector which is not coated by the positive active material layer is on a central portion of the positive current collector.

A temperature sensor is arranged on the heat converging path, which sense the temperature of the heat converging path. The temperature sensor is a thin-film temperature sensor.

The positive active material of the positive active material layer is lithium iron phosphate, lithium cobalt oxide, lithium manganate, or a ternary material. The negative active material of the negative active material layers is carbon, tin-based negative material, a transition metal nitride containing lithium or alloy.

### BRIEF DESCRIPTION OF THE DRAWINGS

FIG. 1 is a schematic view of a lithium-ion power battery in a first embodiment according to the present disclosure.
FIG. 2 is a schematic view of a battery cell of the lithium-ion power battery of FIG. 1.
FIG. 3 is a cross-sectional view of a battery cell of the lithium-ion power battery of FIG. 1.
FIG. 4 is a cross-sectional view of a battery cell of a lithium-ion power batter.
FIG. 5 is a schematic view of a lithium-ion power battery in a fifth embodiment according to the present disclosure.
FIG. 6 is a schematic view of a lithium-ion power battery in a sixth embodiment according to the present disclosure.
FIG. 7 is a schematic view of a lithium-ion power battery in a seventh embodiment according to the present disclosure.
FIG. 8 is a schematic view of a lithium-ion power battery in an eighth embodiment according to the present disclosure.
FIG. 9 is a schematic view of a lithium-ion power battery in a ninth embodiment according to the present disclosure.
FIG. 10 is a schematic view of a lithium-ion power battery in a tenth embodiment according to the present disclosure.
FIG. 11 is a schematic view of a lithium-ion power battery in an eleventh embodiment according to the present disclosure.
FIG. 12 is a schematic view of a lithium-ion power battery in a twelfth embodiment according to the present disclosure.
FIG. 13 is a schematic view of a lithium-ion power battery in a thirteenth embodiment according to the present disclosure.

### DETAILED DESCRIPTION

Implementations of the disclosure will now be described, by way of embodiments only, with reference to the drawings.

A lithium-ion power battery comprises a battery cell, a metal casing configured to receive the battery cell, an electrolyte injected into the metal casing, and a top cover plate fixedly connected to the metal casing. The battery cell comprises a positive electrode plate, a negative electrode plate, and a separator spaced between the positive electrode plate and the negative electrode plate. The positive electrode plate, the separator, and the negative electrode plate are sequentially laminated or wound to form the battery cell. The positive electrode plate carries a positive electrode tab. The negative electrode plate carries a negative electrode tab. The top cover plate carries a positive terminal post which is electrically connected to the positive electrode tab, and a negative terminal post which is electrically connected to the negative electrode tab. The negative electrode plate comprises a negative current collector and two negative active material layers which are coated on the front and back sides of the negative current collector. The positive electrode plate comprises a positive current collector and two positive active material layers which are coated on the front and back sides of the positive current collector. At least one of the positive electrode plate and the negative electrode plate further comprises a heat conducting and collecting body. The heat conducting and collecting body is a portion of the positive current collector not coated by the positive active material layer or a portion of the negative current collector not coated by the negative active material layer. At least two heat conducting and collecting bodies are stacked together to form at least one heat converging path.

In drawings, numeric 1 refers to a positive electrode tab, numeric 2 refers to a negative electrode tab, numeric 3 refers to a positive terminal post, numeric 4 refers to a negative terminal post, numeric 5 refers to a heat conducting and collecting body, numeric 6 refers to a fluid-containing pipe, numeric 7 refers to a battery cell, numeric 8 refers to a heat exchange device, numeric 9 refers to a metal casing, numeric 10 refers to a top cover plate, numeric 11 refers to a heat converging path.

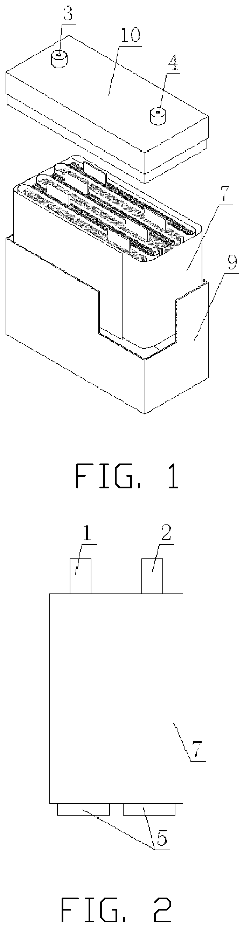

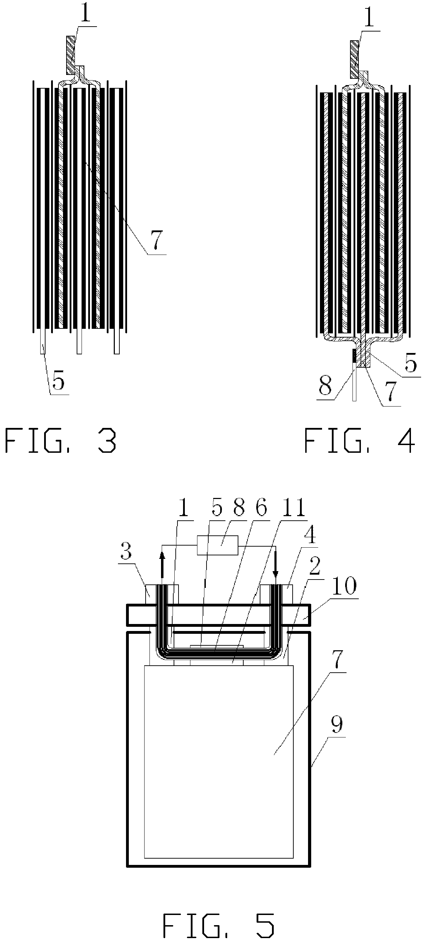

Referring to FIG. 1, the positive and negative electrode tabs and are arranged on a same side. The positive and negative electrode plates both carry a heat conducting and collecting body 5 which is arranged on a side opposite to the electrode tabs which is a bottom side of the metal casing 9. The positive electrode tab 1 is electrically connected to a positive terminal post 3 arranged on a top cover plate 10, the negative electrode tab 1 is electrically connected to a negative terminal post 4 arranged on the top cover plate 10. Referring to FIGS. 2 and 3, the heat conducting and collecting body 5 is connected to the current collector as an integral unit. Referring to FIG. 4, a plurality of heat conducting and collecting bodies 5 are connected to form a heat converging path 11 configured to transmit heat energy into or out of the battery.

Referring to FIG. 5, the positive and negative electrode tabs and are arranged at the same side, the heat conducting and collecting bodies are arranged between the positive and negative electrode plates and overlap with each other to form the heat converging path. A fluid-containing pipe is arranged on the heat converging path. The fluid-containing pipe enters into the battery through the negative terminal post and leaves the battery through the positive terminal post. A hole through which the fluid-containing pipe passes is defined between the positive and negative terminal posts and. In another embodiment, the fluid containing pipe enters into the battery through the positive terminal post and leaves the battery through the negative terminal post. A heat exchange device outside of the metal casing is connected to an inlet and an outlet of the fluid-containing pipe, thereby forming a complete path for circulation.

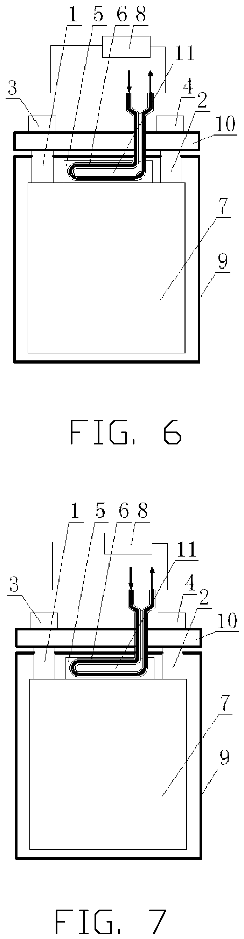

Referring to FIG. 6, the positive and negative electrode tabs and are arranged at the same side, the heat conducting and collecting bodies are arranged between the positive and negative electrode plates and overlap with each other to form the heat converging path. The fluid-containing pipe is arranged on the heat converging path. The fluid-containing pipe enters and leaves the battery through the top cover plate but at different positions thereof. The second heat exchange device outside of the metal casing is connected to an inlet and outlet of the fluid-containing pipe to form a complete circulation path.

Referring to FIG. 7, the positive and negative electrode tabs and are arranged at the same side, the heat conducting and collecting bodies are arranged between the positive and negative electrode plates, on the positive electrode plate, or on the negative electrode plate. The heat conducting and collecting bodies overlap with each other to form the heat converging path. The fluid-containing pipe is arranged on the heat converging path. The top cover plate defines a first hole through which the fluid-containing pipe enters and leaves the battery. The inlet and outlet of the fluid-containing pipe are both arranged in the first hole. The second heat exchange device outside of the metal casing is connected to an inlet and outlet of the fluid-containing pipe to form the complete path.

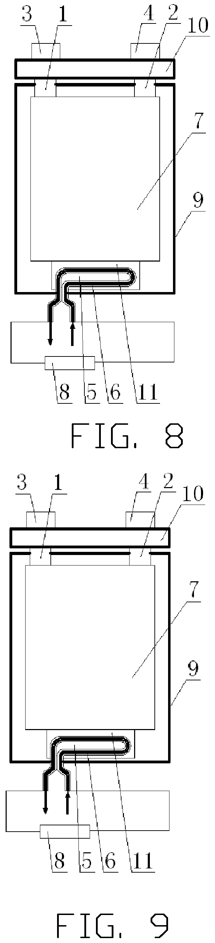

Referring to FIG. 8, the positive and negative electrode tabs and are arranged at the same side, the heat conducting and collecting bodies are arranged on an opposite side of battery with respect to the positive and negative electrode tabs and. The heat conducting and collecting bodies are arranged on the positive electrode plate or the negative electrode plate and overlap with each other to form the heat converging path. The fluid-containing pipe enters and leaves the battery through the bottom of the metal casing again at different positions thereof. The second heat exchange device outside of the metal casing is connected to an inlet and outlet of the fluid-containing pipe to form the complete path.

Referring to FIG. 9, the positive and negative electrode tabs and are arranged at the same side, and the heat conducting and collecting bodies are arranged on an opposite side with respect to the positive and negative electrode tabs and. The heat conducting and collecting bodies which are arranged on the positive electrode plate or the negative electrode plate overlap with each other to form the heat converging path. The bottom of the metal casing defines a second hole through which the fluid-containing pipe enters and leaves the battery. The inlet and outlet of the fluid-containing pipe are both arranged in the second hole. The second heat exchange device outside of the metal casing is connected to an inlet and outlet of the fluid-containing pipe to form the complete path.

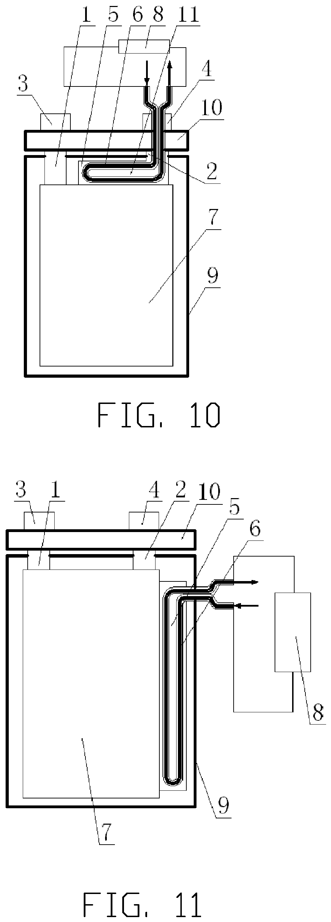

Referring to FIG. 10, the positive and negative electrode tabs and are arranged at the same side, the heat conducting and collecting bodies are arranged between the positive and negative electrode plates and connected to the negative electrode plate as an integral unit. The heat conducting and collecting bodies overlap with each other to form the heat converging path. The fluid-containing pipe is arranged on the heat converging path. The fluid-containing pipe enters and leaves the battery through a hole defined on the negative thermal post. The hole through which the fluid-containing pipe passes is defined between the positive and negative terminal posts and. In another embodiment, the heat conducting and collecting bodies are connected to the positive electrode plate as an integral unit, the fluid-containing pipe enters and leaves the battery through a hole defined on the positive thermal post. The second heat exchange device outside of the metal casing is connected to an inlet and outlet of the fluid-containing pipe to form the complete path.

Referring to FIG. 11, the positive and negative electrode tabs and are arranged at the same side, the heat conducting and collecting bodies are arranged on one side of the battery cell and overlap with each other to form the heat converging path. The fluid-containing pipe is arranged on the heat converging path. One side of the metal casing defines a third hole through which the fluid-containing pipe enters and leaves the battery. The second heat exchange device outside of the metal casing is connected to an inlet and outlet of the fluid-containing pipe to form the complete path.

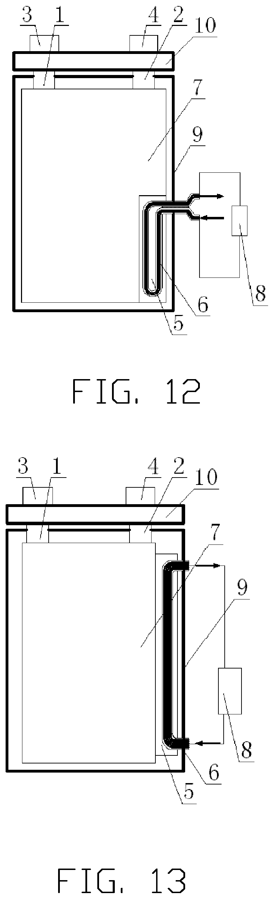

Referring to FIG. 12, the positive and negative electrode tabs and are arranged at the same side of the battery, the heat conducting and collecting bodies are arranged on one side of the battery cell, are recessed with respect to the electrode plate, and overlap with each other to form the heat converging path. The fluid-containing pipe is arranged on the heat converging path. One side of the metal casing defines a fourth hole through which the fluid-containing pipe enters and leaves the battery. The second heat exchange device outside of the metal casing is connected to an inlet and outlet of the fluid-containing pipe to form the complete path.

Referring to FIG. 13, the positive and negative electrode tabs and are arranged at the same side of the battery, the heat conducting and collecting bodies are arranged on one side of the battery cell and overlap with each other to form the heat converging path. The fluid-containing pipe is arranged on the heat converging path. The fluid-containing pipe enters and leaves the battery through one side of the metal casing at different positions thereof. The second heat exchange device outside of the metal casing is connected to an inlet and outlet of the fluid-containing pipe to form the complete path.

Implementations of the above disclosure are described by way of embodiments only. It should be noted that devices and structures not described in detail are to be implemented by general equipment and methods available in the art.

It is to be understood, even though information and advantages of the present embodiments have been set forth in the foregoing description, together with details of the structures and functions of the present embodiments, the disclosure is illustrative only; changes may be made in detail, especially in matters of shape, size, and arrangement of parts within the principles of the present embodiments to the full extent indicated by the plain meaning of the terms in which the appended claims are expressed.

## Claims

1. A lithium-ion power battery comprising:
a battery cell comprising a positive electrode plate, a negative electrode plate and a separator spaced between the positive electrode plate and the negative electrode plate, the positive electrode plate, the separator, and the negative electrode plate being sequentially laminated or wound to form the battery cell, the positive electrode plate carrying a positive electrode tab and comprising a positive current collector and a positive active material layer coated on the positive current collector, the negative electrode plate carrying a negative electrode tab and comprising a negative current collector and a negative active material layer coated on the negative current collector;
a metal casing configured to receive the battery cell;
electrolyte injected into the meatal casing; and
a top cover plate fixedly connected to the metal casing, the top cover carrying a positive terminal post which is electrically connected to the positive electrode tab and a negative terminal post which is electrically connected to the negative electrode tab;
wherein at least one of the positive electrode plate and the negative electrode plate comprises two heat conducting and collecting bodies, each of the heat conducting and collecting bodies is a portion of the positive current collector which is not coated by the positive active material layer or a portion of the negative current collector which is not coated by the negative active material layer, at least two heat conducting and collecting bodies are stacked together to form at least one heat converging path, which is configured to transmit heat energy into or out of the battery cell, an insulating element is connected to the at least one heat converging path.

2. The lithium-ion power battery of claim 1, wherein the at least two heat conducting and collecting bodies are connected by welding.

3. The lithium-ion power battery of claim 2, wherein a method of the welding comprises ultrasonic welding, laser welding, and friction welding.

4. The lithium-ion power battery of claim 1, wherein the at least two heat conducting and collecting bodies are connected to each other by bolting or riveting.

5. The lithium-ion power battery of claim1, wherein the at least two heat conducting and collecting bodies are bent towards each other.

6. The lithium-ion power battery of claim 5, wherein the at least two heat conducting and collecting bodies are bent to be inclined with the positive electrode plate or the negative electrode plate by an angle between 0 degree to 90 degrees.

7. The lithium-ion power battery of claim 5, wherein the at least two heat conducting and collecting bodies are bent towards different directions or a single direction.

8. The lithium-ion power battery of claim 1, wherein a portion of each of the heat conducting and collecting bodies is bent, and the portion which is bent is connected to a remaining portion of a corresponding one of the at least two heat conducting and collecting bodies, the remaining portion of each of the heat conducting and collecting bodies is straight.

9. The lithium-ion power battery of claim 8, wherein the portion of the heat conducting and collecting bodies are bent towards a single direction or different directions.

10. The lithium-ion power battery of claim 1, wherein at least a portion of the at least two heat conducting and collecting bodies defines a plurality of holes or a concave and convex surface.

11. The lithium-ion power battery of claim 1, wherein an insulating layer is arranged on a surface of each of the heat conducting and collecting bodies or on a surface of each of the at least one heat converging path.

12. The lithium-ion power battery of claim 1, wherein the at least one heat converging path is arranged on an end of the lithium-ion power battery, the end of the lithium-ion power battery having a positive electrode tab, an end of the lithium-ion power battery opposite to the positive electrode tab, or a side of the lithium-ion power battery.

13. The lithium-ion power battery of claim 12, wherein the heat conducting and collecting bodies form a plurality of heat converging paths, at least one of the plurality of heat converging paths is arranged on the end of the lithium-ion power battery having the positive electrode tab.

14. The lithium-ion power battery of claim 1, wherein each of the at least two heat conducting and collecting bodies protrudes from the positive electrode plate.

15. The lithium-ion power battery of claim 14, wherein portions of the at least two heat conducting and collecting bodies which protrude from the positive electrode plate are inserted into an electrolyte of the lithium-ion power battery.

16. The lithium-ion power battery of claim 1, wherein a heat exchange device is disposed in an electrolyte of the lithium-ion power battery, the heat exchange device heats or cools the electrolyte.

17. The lithium-ion power battery of claim 1, wherein each of the at least two heat conducting and collecting bodies is recessed with respect to the positive electrode plate.

18. The lithium-ion power battery of claim 1, wherein an interconnecting portion is formed between the at least two heat conducting and collecting bodies and the positive electrode plate, a width of each of the at least two heat conducting and collecting bodies is the same as a width of the interconnecting portion.

19. The lithium-ion power battery of claim 1, wherein a portion of the positive current collector which is not coated by the positive active material layer is on a central portion of the positive current collector.

20. The lithium-ion power battery of claim 1, wherein a temperature sensor is arranged on the at least one heat converging path.
